# EUROPEAN PATENT APPLICATION

(11) **EP 3 922 478 A1**
(43) Date of publication of application: **15.12.2021**
(21) Application number: 20781987.1
(22) Date of filing: 27.03.2020
(51) Int. Cl.: B44C 1/17, B41M 5/382, B41M 5/50, B41M 5/52, B32B 7/06

(54) **INTERMEDIATE TRANSFER MEDIUM, RECORDING MEDIUM, DECORATIVE SHEET, AND DECORATIVE PRODUCT**

(30) Priority: 29.03.2019 JP 2019068665
(71) Applicant: Dai Nippon Printing Co., Ltd., Shinjuku-ku, Tokyo 162-8001 (JP)
(72) Inventor: YODA Shinya, Tokyo 162-8001 (JP); KOBAYASHI Yoshimasa, Tokyo 162-8001 (JP); YOSHINO Shuhei, Tokyo 162-8001 (JP)
(74) Representative: Cabinet Beau de Loménie
(86) International application number: PCT/JP2020/014256
(87) International publication number: WO 2020/203861

(57) **Abstract**

Provided are an intermediate transfer medium and the like with which a glossy image can be easily formed and which can be used also for a transparent transfer receiving article. In an intermediate transfer medium comprising at least a substrate and a transfer part provided releasably on one face of the substrate, the transfer part has a layered structure comprising at least an image forming layer that is located on the outermost surface on the opposite side to the substrate and on which an image is to be formed, and a gloss layer that is located closer to the substrate side than the image forming layer, and the transfer part has a maximum transmittance in the wavelength region of 380 nm to 780 nm of 40% or less.

## Description

### Technical Field

The present disclosure relates to an intermediate transfer medium, a recording medium, a method for producing a decorative sheet, a decorative sheet, a method for producing a decorated article, and a decorated article.

### Background art

As a device for producing a print having a thermal transferred image, there is known a thermal transfer method in which a thermal transfer sheet comprising a colorant layer and a thermal transfer image-receiving sheet comprising a receiving layer are combined, and energy is applied to the thermal transfer sheet to thereby form the thermal transferred image on the receiving layer of the thermal transfer image-receiving sheet. Not in the case of a print including an image formed on the receiving layer of the thermal transfer image-receiving sheet, but in the case where a thermal transferred image is formed on an arbitrary transfer receiving article, there is also suggested a method in which an intermediate transfer medium comprising a transfer part including an image forming layer is used, an image is once formed on the image forming layer of this intermediate transfer medium to provide an image layer, and the transfer part including this image layer is transferred onto a transfer receiving article to thereby form the image on the transfer receiving article.

### Citation List

### Patent Literature

Patent Literature 1: Japanese Patent Laid-Open No. 62-238791

### Summary of Invention

### Technical Problem

With the diversification of prints, transparent transfer receiving articles such as glass have been recently decorated by forming an image thereon, but such decoration is still under development. Particularly in the case of forming an image having a gloss feel on a transparent transfer receiving article, the printing step becomes complicated, and there has been room for improvement.

The present disclosure aims principally to provide an intermediate transfer medium with which a glossy image can be easily formed and which can be used also for a transparent transfer receiving article, a recording medium, a method for producing a decorative sheet, a decorative sheet, a method for producing a decorated article, and a decorated article.

### Solution to Problem

An intermediate transfer medium of the present disclosure for solving the above problem is an intermediate transfer medium including at least a substrate and a transfer part provided releasably on one face of the substrate, wherein the transfer part has a layered structure including at least an image forming layer that is located on the outermost surface on the opposite side to the substrate and on which an image is to be formed, and a gloss layer that is located closer to the substrate side than the image forming layer, and the transfer part has a maximum transmittance in the wavelength region of 380 nm to 780 nm of 40% or less.

A recording medium of the present disclosure for solving the above problem includes at least a substrate, a gloss layer, and an image forming layer that are layered in this order, an image being to be formed on the image forming layer, the entire recording medium having a maximum transmittance in the wavelength region of 380 nm to 780 nm of 40% or less.

A method for producing a decorative sheet of the present disclosure for solving the above problem includes an image forming step of forming an image on the image forming layer in the intermediate transfer medium of the present disclosure.

A method for producing a decorative sheet of the present disclosure for solving the above problem includes an image forming step of forming an image on the image forming layer of the recording medium of the present disclosure.

A decorative sheet of the present disclosure for solving the above problem is a decorative sheet including at least a substrate and a decorative part provided releasably on one face of the substrate, wherein the decorative part has a layered structure including at least an image layer having an image formed thereon and a gloss layer, and the decorative part has a maximum transmittance in the wavelength region of 380 nm to 780 nm of 40% or less.

A decorative sheet of the present disclosure for solving the above problem is a decorative sheet including at least a substrate and a decorative part provided on one face of the substrate, wherein the decorative part has a layered structure including at least an image layer having an image formed thereon and a gloss layer, and the decorative sheet has a maximum transmittance in the wavelength region of 380 nm to 780 nm of 40% or less.

A method for producing a decorated article of the present disclosure for solving the above problem includes an integration step of integrating a transfer receiving article and the decorative sheet of the present disclosure.

A decorated article of the present disclosure for solving the above problem is integrated with the decorative sheet of the present disclosure.

### Advantageous Effect of Invention

According to the intermediate transfer medium, the recording medium, the method for producing a decorative sheet, the decorative sheet, the method for producing a decorated article, and the decorated article of the present disclosure, a glossy image can be formed easily and on demand even on a transparent transfer receiving article.

### Brief Description of Drawings

FIG. 1 is a schematic sectional view illustrating an exemplary intermediate transfer medium according to a first embodiment of the present disclosure.
FIG. 2 is a schematic sectional view illustrating an exemplary intermediate transfer medium according to a second embodiment of the present disclosure.
FIG. 3 is a schematic sectional view illustrating an exemplary decorative sheet according to a third embodiment of the present disclosure.
FIG. 4 is a schematic sectional view illustrating an exemplary decorative sheet according to a fourth embodiment of the present disclosure.
FIG. 5 is a schematic sectional view illustrating an exemplary decorative sheet according to a fifth embodiment of the present disclosure.
FIG. 6 is a schematic sectional view illustrating an exemplary decorated article according to a sixth embodiment of the present disclosure.

### Description of Embodiments

Hereinafter, the embodiments of the present disclosure will be described with reference to the drawings. The present disclosure may be embodied in different aspects and should not be construed as being limited to the description of the exemplary embodiments below. In the drawings, each layer may be shown schematically regarding the thickness, shape and the like thereof, compared with actual aspects, for the sake of clearer illustration. The schematic drawings are merely examples and do not limit the interpretations of the present disclosure in any way. In the specification and the drawings, components that have substantially the same functions as those described before with reference to previous drawings bear the identical reference signs thereto, and detailed descriptions thereof may be omitted.

### (1) Intermediate transfer medium

Hereinafter, an intermediate transfer medium according to an embodiment of the present disclosure will be described.

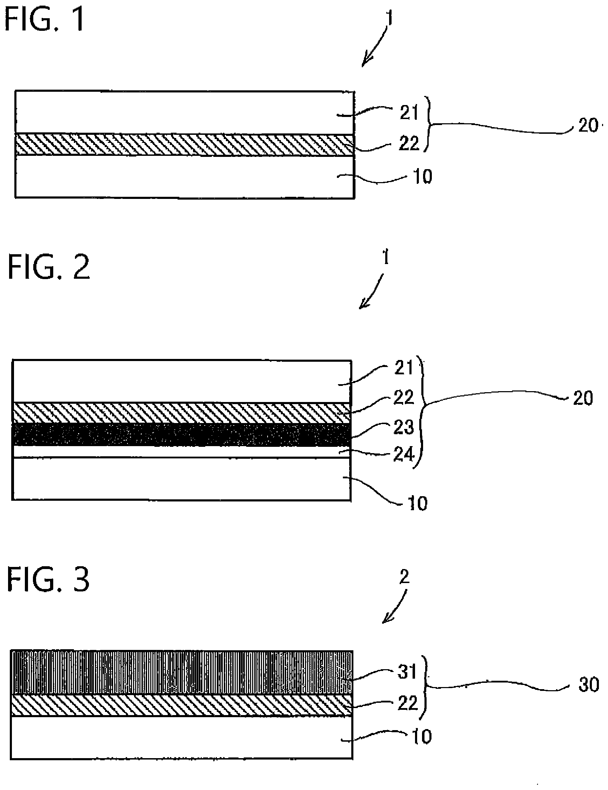

FIG. 1 is a schematic sectional view illustrating an exemplary intermediate transfer medium according to a first embodiment of the present disclosure.

As shown in FIG. 1, an intermediate transfer medium 1 according to the present embodiment includes a substrate 10 and a transfer part 20 provided releasably on one face of this substrate 10 (the upper face in FIG. 1). The transfer part 20 has a layered structure including an image forming layer 21 that is located on the outermost surface on the opposite side to the substrate 10 (the uppermost face in FIG. 1) and on which an image is to be formed, and a gloss layer 22 that is located closer to the substrate 10 side than this image forming layer 21 (below the image forming layer 21 in FIG. 1). Further, the transfer part 20 constituting the intermediate transfer medium 1 according to the present embodiment is characterized by having a maximum transmittance in the wavelength region of 380 nm to 780 nm of 40% or less.

According to the intermediate transfer medium 1 according to the present embodiment, after a desired image is formed, for example, on demand on the image forming layer 21 located on the outermost surface of the transfer part 20, the entire transfer part 20 including the image forming layer 21 on which the image has been formed and the gloss layer 22 is transferred onto a transfer receiving article to thereby enable the desired image having a gloss feel to be easily formed on the transfer receiving article.

Hereinafter, each constituent of the intermediate transfer medium 1 according to the present embodiment will be described.

### • Substrate

The substrate 10 supports the transfer part 20 and other layers having various functions to be provided thereon. Accordingly, there is no particular limitation on a substrate as long as the substrate has the functions, and the substrate may be appropriately selected from substrates used in conventional intermediate transfer media and used. Specific examples thereof may include stretched or unstretched films of plastics including polyesters having high heat resistance such as polyethylene terephthalate, polyethylene naphthalate, polybutylene terephthalate, polyphenylene sulfide, polyether ketone, and polyether sulfone, polypropylenes, polycarbonate, cellulose acetates, polyethylene derivatives, polyvinyl chloride, polyvinylidene chloride, polystyrenes, polyamides, polyimides, polymethylpentene, or ionomers. Composite films obtained by laminating two or more of these materials can be also used.

The thickness of the substrate 10 may be appropriately selected depending on the kind of the material used, so that the strength, heat resistance and the like of the substrate lie in appropriate ranges, and is preferably 1 µm or more and 100 µm or less in general.

### • Transfer part

The intermediate transfer medium 1 according to the present embodiment is characterized in that the transfer part 20 having a layered structure of the gloss layer 22 and the image forming layer 21 is provided on the above substrate 10 and the entire transfer part 20 has a maximum transmittance in the wavelength region of 380 nm to 780 nm of 40% or less. When the entire transfer part 20 to be finally transferred onto a transfer receiving article is caused to have a maximum transmittance in the wavelength region of 380 nm to 780 nm of 40% or less, the influence of the background pattern of the transfer receiving article and the influence of natural light on the image formed on the image forming layer 21 can be lessened, and desired designability can be imparted to the transfer receiving article without reduction in the gloss feel originally possessed by the gloss layer 22. From this viewpoint, the entire transfer part 20 has a maximum transmittance in the wavelength region of 380 nm to 780 nm of preferably 30% or less and more preferably 20% or less.

Here, the phrase "maximum transmittance in the wavelength region of 380 nm to 780 nm" herein refers to a value measured with an UV-VIS Spectrophotometer (UV-3100PC, SHIMADZU CORPORATION) including an integrating sphere attachment (ISR-3100, SHIMADZU CORPORATION) attached. More specifically, a transparent glass plate having a thickness of 5 mm (GB300, AS ONE Corporation) is provided as a transfer receiving article, and the transfer part 20 is transferred from the intermediate transfer medium 1 on this transfer receiving article. The transfer receiving article including the transfer part 20 transferred thereon is placed on the sample-beam side of the spectrophotometer, a transparent glass plate equivalent to the transfer receiving article is placed as a blank on the reference-beam side thereof, and the transmittances in the region of 380 nm to 780 nm are measured to determine the maximum value.

The transfer part 20 in the intermediate transfer medium 1 according to the present embodiment includes the image forming layer 21 and the gloss layer 22, and the image forming layer 21 is often transparent. In such a case, it can be said that the transmittance of the gloss layer 22 is the transmittance of the entire transfer part 20.

### • Image forming layer

The image forming layer 21 constituting the transfer part 20 is a layer for forming a desired image to be finally imparted on a transfer receiving article. Accordingly, the image forming layer 21 in the intermediate transfer medium 1 according to the present embodiment is in a state where no image is yet formed thereon. The image forming layer 21 after an image is formed thereon herein is referred to as an image layer. As described above, the image forming layer 21, because of being a layer for formation of an image, is located in the transfer part 20, on the outermost surface on the opposite side to the substrate 10.

There is no particular limitation on the image forming layer 21 as long as a desired image can be formed on the layer by various devices, and the layer can be appropriately designed according to devices for forming an image and the like. For example, when an image is formed using a sublimation-type thermal transfer sheet, a receiving layer that can receive a sublimable dye may be used as the image forming layer 21. Meanwhile, when an image is formed using a thermally-fusible thermal transfer sheet, various paper and plastic films on which thermally fusible ink can be fixed may be used as the image forming layer 21. In either of the cases, in order to reflect the gloss feel of the gloss layer 22 located below the image forming layer 21 on an image, the image forming layer 21 is preferably transparent or semitransparent.

There is no particular limitation either on the method for forming the image forming layer 21. For example, the image forming layer 21 may be formed by dispersing or dissolving various resin materials in a suitable solvent to prepare a coating liquid for image forming layer, coating this coating liquid on the gloss layer 22 described below, and drying the coated liquid. Alternatively, a sheet composed of various resin materials may be bonded on the gloss layer 22 using various adhesives.

The thickness of the image forming layer 21 is, for example, 1 µm or more and 10 µm or less.

### • Gloss layer

The gloss layer 22 constituting the transfer part 20 is a layer for imparting a gloss feel to an image formed on the above image forming layer 21 to thereby provide a transfer receiving article including the transfer part 20 transferred thereon with a glossy decoration. The gloss layer 22 is located closer to the substrate 10 side than the above image forming layer 21 in the transfer part 20. As described above, the gloss layer 22 is required to have such a transmittance that the entire transfer part 20 including the gloss layer 22 has a maximum transmittance in the wavelength region of 380 nm to 780 nm of 40% or less. When the image forming layer 21 is transparent, the gloss layer is required to have a maximum transmittance in the wavelength region of 380 nm to 780 nm of 40% or less.

Examples of the gloss layer 22 include a metal pigment-containing layer, a metal vapor-deposited layer, and further a pearl pigment-containing layer. Examples of materials of metal pigments constituting the metal pigment-containing layer include aluminum, nickel, tin, chromium, and indium. Examples of resins into which these metal pigments are to be contained include vinyl resins and polyesters. Examples of the metal constituting the metal vapor-deposited layer include indium and tin. Examples of raw materials of the pearl pigment constituting the pearl pigment-containing layer include oxide-coated micas such as titanium oxide-coated silica, titanated mica, iron oxide-coated mica, iron oxide-coated titanated mica, iron blue-coated titanated mica, iron blue-iron oxide-coated titanated mica, chromium oxide-coated titanated mica, carmine-coated titanated mica, organic pigment-coated titanated mica, titanium oxide-coated mica, and titanium oxide-coated synthesized mica; oxide-coated glass powders such as titanium oxide-coated glass powder and iron oxide-coated glass powder; oxide-coated metal particles such as titanium oxide-coated aluminum powder; scaly foils of basic lead carbonate, lead hydrogen arsenate, bismuth oxychloride, and the like; fish scale powder, shell pieces, and pearl pieces. Examples of resins into which these are to be contained include vinyl resins and polyesters.

There is no particular limitation either on the method for forming the gloss layer 22. For example, a metal pigment-containing layer or a pearl pigment-containing layer may be formed by dispersing or dissolving various pigments and various resin materials in a suitable solvent to prepare a coating liquid for gloss layer, coating this coating liquid on the substrate 10, and drying the coated liquid. In the case of a metal vapor-deposited layer, various metals may be vapor-deposited on the substrate 10 by various vapor deposition methods.

The thickness of the gloss layer 22 can be appropriately designed in consideration of the visible light transmittance of the entire transfer part 20. The thickness is preferably of the order of 0.1 µm or more and 10 µm or less in the case of a metal pigment-containing layer, preferably of the order of 10 nm or more and 500 nm or less in the case of a metal vapor-deposited layer, and preferably of the order of 0.3 µm or more and 10 µm or less in the case of a pearl pigment-containing layer.

Although not shown, the gloss layer 22 is not necessarily provided in a continuous manner on the entire face, and may be provided in a discontinuous manner, that is, partially, according to a desired design or an image to be formed on the image forming layer 21.

FIG. 2 is a schematic sectional view illustrating an exemplary intermediate transfer medium according to a second embodiment of the present disclosure.

An intermediate transfer medium 1 according to the second embodiment shown in FIG. 2 is different from the intermediate transfer medium 1 according to the first embodiment shown in FIG. 1 in that a concealing layer 23 and an exfoliate layer 24, in addition to the image forming layer 21 and the gloss layer 22, are included in the transfer part 20. As mentioned above, the transfer part 20 in the intermediate transfer medium 1 according to the present disclosure is not necessarily composed only of the image forming layer 21 and the gloss layer 22, may include the concealing layer 23 and the exfoliate layer 24 as shown in FIG. 2, and may include various functional layers other than these layers. Even when layers other than the image forming layer 21 and the gloss layer 22 are included, the entire transfer part 20 is required to have a maximum transmittance in the wavelength region of 380 nm to 780 nm of 40% or less.

### • Concealing layer

The concealing layer 23 to be a portion of the transfer part 20 is a layer for improving the concealability of the entire transfer part 20. There is no particular limitation on the position of the concealing layer 23 in the transfer part 20. Since the image formed on the image forming layer 21 and the gloss layer 22 are caused to exhibit desired designability, the concealing layer is not located between the image forming layer 21 and the gloss layer 22, and thus, the concealing layer is required to be located closer to the substrate side than the gloss layer 22.

The concealing layer 23 is not particularly limited as long as it is a layer having desired concealability, and the concealing layer may contain a resin and a colorant, for example. Examples of the resin in this case can include urethane resins, polyolefins, halogenated resins such as polyvinyl chloride or polyvinylidene chloride, polyvinyl acetate, vinyl chloride - vinyl acetate copolymers, ethylene - vinyl acetate copolymers, polyvinyl butyral, polyesters, polystyrene, polyamide, cellulose resins, polycarbonate, and acrylic resins. Examples of the colorant can include known colorants, such as titanium oxide, zinc oxide, carbon black, black diamond, titanium black, iron oxide, yellow iron oxide, and ultramarine blue.

### • Exfoliate layer

The exfoliate layer 24 to be a portion of the transfer part 20 is a layer for improving the release property of the transfer part on transferring the transfer part 20 onto a transfer receiving article. Accordingly, the exfoliate layer 24 in the transfer part 20 is required to be located on the surface of transfer part 20 on the opposite side to the image forming layer 21, that is, the face in contact with the substrate 10, as shown in FIG. 2.

The exfoliate layer 24 may contain, for example, waxes, a silicone wax, a silicone resin, a silicone-modified resin, a fluorine resin, a fluorine-modified resin, polyvinyl alcohol, an acrylic resin, a thermally cross-linkable epoxy - amino resin, an alkyd - amino resin or the like, and may contain one of these resins singly or may contain two or more of these resins.

The exfoliate layer 24, which will be located on the outermost surface after transfer, may have a function of a protective layer.

There is also no particular limitation either on a method for forming the exfoliate layer 24, and the exfoliate layer 24 may be formed by dispersing or dissolving the above resin in a suitable solvent to prepare a coating liquid for exfoliate layer, coating this coating liquid on the substrate 10, for example, and drying the coated liquid. There is no particular limitation either on the thickness of the exfoliate layer 24, and the thickness may be 0.5 µm or more and 5 µm or less.

### (2) Recording medium

Hereinafter, the recording medium according to an embodiment of the present disclosure will be described.

The recording medium according to the embodiment of the present disclosure includes at least a substrate, a gloss layer, and an image forming layer that are layered in this order, an image being to be formed on the image forming layer, the entire recording medium having a maximum transmittance in the wavelength region of 380 nm to 780 nm of 40% or less. Each of the substrate, the gloss layer, and the image forming layer constituting the recording medium is the same as each of those in the intermediate transfer medium 1, and thus, description is omitted here. The recording medium according to the embodiment of the present disclosure may include a layer other than the substrate, the gloss layer, and the image forming layer. Specifically, the layer other than the substrate is the same as that in the intermediate transfer medium 1.

When an image is formed on the image forming layer in the recording medium according to the embodiment of the present disclosure, the recording medium becomes a decorative sheet. Accordingly, the gloss layer and the image forming layer are different from the intermediate transfer medium in that the gloss layer and the image forming layer cannot be released from the substrate and are integrated as they are with a transfer receiving article, but the operation and effect of the record medium is the same as that of the intermediate transfer medium 1.

### (3) Decorative sheet

Next, a decorative sheet according to an embodiment of the present disclosure will be described.

FIG. 3 is a schematic sectional view illustrating an exemplary decorative sheet according to a third embodiment of the present disclosure.

As shown in FIG. 3, the decorative sheet 2 according to the present embodiment includes a substrate 10 and a decorative part 30 provided releasably on one face of this substrate 10 (the upper face in FIG. 3). The decorative part 30 has a layered structure including an image layer 31 including an image formed thereon and a gloss layer 22. Further, the decorative part 30 constituting the decorative sheet 2 according to the present embodiment is characterized by having a maximum transmittance in the wavelength region of 380 nm to 780 nm of 40% or less.

According to the decorative sheet 2 according to the present embodiment, the entire decorative part including the image layer 31 including a desired image formed thereon and the gloss layer 22 is transferred onto a transfer receiving article to thereby enable the desired image having a gloss feel to be easily formed on the transfer receiving article.

Here, as can be seen from a comparison between FIG. 1 and FIG. 3, in the decorative sheet 2 according to the present embodiment, an image is formed on the image forming layer 21 of the intermediate transfer medium 1 according to the first embodiment shown in FIG. 1, and thus the image forming layer 21 becomes the image layer 31. Accordingly, the substrate 10 and the gloss layer 22 constituting the decorative sheet 2 according to the present embodiment are the same as those in the intermediate transfer medium 1 according to the first embodiment, and thus, description is omitted here.

### • Decorative part

The decorative part 30 constituting the decorative sheet 2 according to the present embodiment is characterized by having a layered structure of the gloss layer 22 and the image layer 31 and having a maximum transmittance of the entire decorative part 30 in the wavelength region of 380 nm to 780 nm of 40% or less. In the decorative part 30 in the present embodiment, the gloss layer 22 is located closer to the substrate 10 side than the image layer 31. According to the decorative part 30 having the characteristics, when the decorative part 30 is transferred onto a transfer receiving article, the influence of natural light can be suppressed, and desired designability can be imparted to the transfer receiving article without reduction in the gloss feel originally possessed by the gloss layer 22.

Here, the "maximum transmittance in the wavelength region of 380 nm to 780 nm" of the decorative part 30 has the same meaning as the "maximum transmittance in the wavelength region of 380 nm to 780 nm" in the transfer part 20 of the intermediate transfer medium 1, and can be measured with a decorative sheet to be measured placed on the sample-beam side.

### • Image layer

The image layer 31 constituting the decorative part 30 is a layer on which an image has been already formed. The image layer 31 can be obtained, for example, by forming an image on the image forming layer 21 in the intermediate transfer medium 1 according to the first embodiment shown in FIG. 1. Accordingly, when the image forming layer 21 in the intermediate transfer medium is a receiving layer, the image layer 31 can be obtained by forming an image using a sublimation-type thermal transfer sheet. On the other hand, in the case of a layer on which thermally fusible ink can be fixed, the image layer 31 can be obtained by forming an image using a thermally-fusible thermal transfer sheet. The image layer 31 is not necessarily formed using a sublimation-type thermal transfer sheet or a thermally-fusible thermal transfer sheet and is only required to be a layer including a desired image formed thereon.

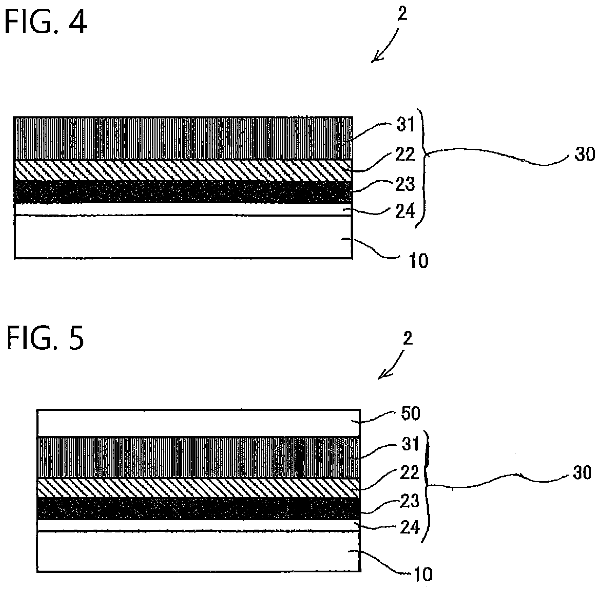

FIG. 4 is a schematic sectional view illustrating an exemplary decorative sheet according to a fourth embodiment of the present disclosure.

In the decorative sheet 2 according to the present embodiment, an image is formed on the image forming layer 21 of the intermediate transfer medium 1 according to the second embodiment of the present disclosure shown in FIG. 2 to thereby cause the image forming layer 21 to be the image layer 31. Also in the decorative part 30 in the decorative sheet 2 according to the present embodiment, the gloss layer 22 is located closer to the substrate 10 side than the image layer 31. Each of the layers constituting the decorative sheet 2 according to the present embodiment has been described above, and description is omitted here.

FIG. 5 is a schematic sectional view illustrating an exemplary decorative sheet according to a fifth embodiment of the present disclosure.

The decorative sheet 2 according to the present embodiment is characterized in that an adhesive layer 50 is provided on the surface of the decorative part 30 (the upper face in FIG. 5) in the decorative sheet 2 according to the fourth embodiment of the present disclosure shown in FIG. 4. As mentioned above, providing the adhesive layer 50 on the surface of the decorative part 30 can improve the adhesion on integrating the decorative part 30 with the transfer receiving article. Particularly when the image layer 31 per se, constituting the decorative part 30, has no or low adhesion performance, providing the adhesive layer 50 is effective.

Also in the decorative part 30 in the decorative sheet 2 according to the present embodiment, the gloss layer 22 is located closer to the substrate 10 side than the image layer 31. Among each of the layers constituting the decorative sheet 2 according to the present embodiment, each of the layers other than the adhesive layer 50 has been described above, and description is omitted here.

### • Adhesive layer

There is no limitation on the adhesive layer 50 in the decorative sheet 2 according to the present embodiment. There can be appropriately used various adhesive layers that have been conventionally used when the decorative part 30 of the decorative sheet 2 is attached and fixed on a transfer receiving article. The adhesive layer 50 may contain a component having an adhesive property. Examples of the component having an adhesive property may include acrylic resins, vinyl chloride - vinyl acetate copolymers, vinyl acetate resins, polyesters, epoxy resins, polyimides, and synthetic rubbers. The adhesive layer 50 may contain a plurality of components as the component having an adhesive property. The adhesive layer 50 may be an adhesive film or an adhesive sheet. The thickness of the adhesive layer 16 is preferably 1 µm or more and 1000 µm or less.

The adhesive layer 50 may be a so-called pressure-sensitive adhesive layer, which has always a pressure-sensitive adhesive property. There is no particular limitation on the components of the pressure-sensitive adhesive layer. Examples of the pressure-sensitive adhesive layer may include acrylic resins, vinyl resins, polyesters, urethane resins, polyamides, epoxy resins, rubber-based resins, and ionomer resins. There is no particular limitation on the thickness of the pressure-sensitive adhesive layer, and the thickness is generally 5 µm or more and 20 µm or less and preferably 8 µm or more and 10 µm or less.

When the adhesive layer 50 is a pressure-sensitive adhesive layer, there is no particular limitation either on a method for forming the pressure-sensitive adhesive layer. For example, the pressure-sensitive adhesive layer may be formed by dispersing or dissolving the above resin in a suitable solvent to prepare a coating liquid for pressure-sensitive adhesive layer, coating this coating liquid on the decorative part 30, and drying the coated liquid. Meanwhile, a pressure-sensitive adhesive sheet referred to as a so-called mount film or double-sided tape may be bonded on the decorative part 30 to provide a pressure-sensitive adhesive layer.

The adhesive layer 50 may be a so-called heat seal layer, which develops pressure-sensitive adhesion by heat. In the heat seal layer, a material having good adhesion with a transfer receiving article is preferably used. Specific examples of the material may include cellulose derivatives such as ethyl cellulose and cellulose acetate butyrate, polystyrene, styrene copolymers such as poly α-methylstyrene, acrylic resins such as polymethyl methacrylate, polyethyl methacrylate, and polyethyl acrylate, vinyl resins such as polyvinyl chloride, polyvinyl acetate, vinyl chloride - vinyl acetate copolymers, and polyvinyl butyral, polyesters, nylon resins, epoxy resins, and polyurethane.

When the adhesive layer 50 is a heat seal layer, there is no particular limitation either on a method for forming the heat seal layer. For example, the heat seal layer may be formed by dispersing or dissolving the above resin in a suitable solvent to prepare a coating liquid for heat seal layer, coating this coating liquid on the decorative part 30, and drying the coated liquid. Alternatively, a heat seal layer transfer sheet including a heat seal layer layered on a substrate may be provided, and the heat seal layer may be transferred and formed on the decorative part 30 using this transfer sheet. There is no particular limitation either on the thickness of the heat seal layer, and the thickness is preferably 0.1 µm or more and 20 µm or less, for example.

The adhesive layer 50 may include either one or both of an ultraviolet absorbing agent and an ultraviolet scattering agent. When an ultraviolet absorbing agent or an ultraviolet scattering agent is included, ultraviolet shielding performance can be imparted to the adhesive layer 50.

There is no limitation on the types of the ultraviolet absorbing agent or ultraviolet scattering agent. Examples of the ultraviolet absorbing agent may include benzotriazole, benzophenone, and hydroxyphenyl triazine. Examples of the ultraviolet scattering agent may include titanium oxide, zinc oxide, and cerium oxide. Among these, benzotriazole is particularly preferred.

There is no particular limitation on the content of the ultraviolet absorbing agent and the ultraviolet scattering agent. For example, the content may be 0.1% by mass or more and 15% by mass or less and is preferably 0.5% by mass or more and 10% by mass or less based on the mass of the adhesive layer 50.

Next, modifications of the decorative sheet according to embodiment of the present disclosure described above will be described.

### • Modification of decorative sheet (1)

In the decorative sheet of the present disclosure, a part or all of the substrate constituting the decorative sheet may be separable. Accordingly, the decorative sheet may be produced with the substrate in a thick state, and additionally, on integrating the decorative sheet with a transfer receiving article, the substrate may be eliminated or may be in a thin state. There is no particular limitation on a specific device for allowing the substrate to be separable. For example, while the substrate is caused to have a layered structure, adhesion between the layers constituting the layered structure may be adjusted. Subjecting the layers constituting the layered structure to surface treatment can provide a separation interface between any layers.

### • Modification of decorative sheet (2)

The decorative sheet of the present disclosure may be a decorative sheet including at least a substrate and a decorative part provided on one face of the substrate, wherein the decorative part has a layered structure including at least an image layer having an image formed thereon and a gloss layer, and the decorative sheet may have a maximum transmittance in the wavelength region of 380 nm to 780 nm of 40% or less. The decorative sheet described above is provided such that the decorative part is transferable from the substrate and is based on the premise that only this decorative part is transferred onto a transfer receiving article. However, without limitation to this, when the entire decorative sheet is caused to have a maximum transmittance in the wavelength region of 380 nm to 780 nm of 40% or less, the operation and effect as described above can be exerted even when the entire decorative sheet is integrated with the transfer receiving article. In other words, it can be said that this decorative sheet is one obtained by forming an image on the image forming layer in the recording medium of the present disclosure described above.

Also in this case, as the configuration per se of the decorative sheet, various configurations described above can be employed.

Additionally, there is no particular limitation either on a method for integrating the decorative sheet with a transfer receiving article in this case, and various adhesive layers described above or pressure-sensitive adhesive sheets such as a mount film or double-sided tape may be used.

When the entire decorative sheet is integrated with a transfer receiving article, the entire decorative sheet may be integrated with the transfer receiving article on the substrate side in the decorative sheet or may be integrated with the transfer receiving article on the decorative part in the decorative sheet.

When the entire decorative sheet is integrated with a transfer receiving article on the substrate side in the decorative sheet, the transfer receiving article may be selected as desired. In this case, the decorative part of the decorative sheet is recognized from the decorative sheet side.

When the entire decorative sheet is integrated with a transfer receiving article on the decorative part side in the decorative sheet, a transparent article such as an acrylic board, an acrylic block, or glass is selected as the transfer receiving article. The decorative part of the decorative sheet is recognized from a transparent transfer receiving article side through the transfer receiving article in this case. Thus, the image in the decorative part is provided with a sense of depth and a gloss feel, and thus, high designability can be imparted to the image. In the present disclosure, transparent means that the average transmittance in the wavelength light region of 380 nm or more and 700 nm or less is 50% or more.

### (4) Decorated article

Next, a decorated article according to an embodiment of the present disclosure will be described.

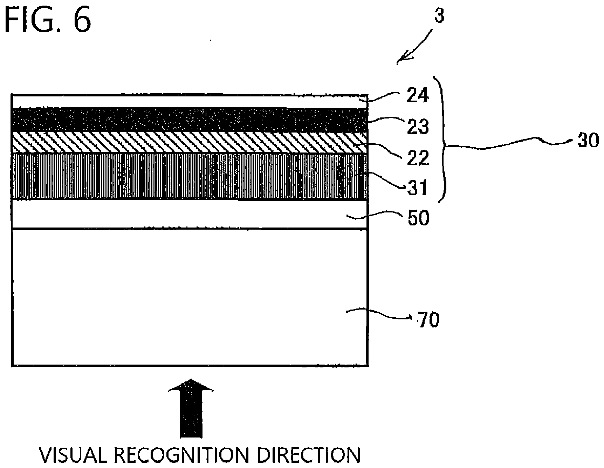

FIG. 6 is a schematic sectional view illustrating an exemplary decorated article according to a sixth embodiment of the present disclosure.

As shown in FIG. 6, in a decorated article 3, a decorative part 30 in the decorative sheet 2 according to the fifth embodiment of the present disclosure is integrated on a transfer receiving article 70 to be decorated via a heat seal layer as an adhesive layer 50. In the decorated article 3 of this type, the image layer 31 is located closer to the transfer receiving article 70 side than the gloss layer 22. Thus, as indicated by the arrow in the figure, the image layer 31 and the gloss layer 22 are visually recognized through the transfer receiving article 70. Accordingly, the transfer receiving article 70 in this case is preferably transparent. According to this decorated article 3, the decorative part 30 has a maximum transmittance in the wavelength region of 380 nm to 780 nm of 40% or less. Thus, a desired image formed on the image layer 31 and the gloss feel of the gloss layer 22 can be visually recognized from the transfer receiving article 70 side without being affected by natural light entering from the opposite side to the transfer receiving article 70.

Examples of the transfer receiving article 70 can include articles made of glass, an acrylic resin, polycarbonate, polyester, or the like. The transfer receiving article 70 made of a material having strength such as glass is preferred because the durability of the visual recognition face of the image can be improved.

### (5) Method for producing decorative sheet

Next, a method for producing a decorative sheet according to an embodiment of the present disclosure will be described.

The method for producing a decorative sheet according to the embodiment of the present disclosure is characterized by including an image forming step of forming an image on the image forming layer in the intermediate transfer medium according to the embodiment of the present disclosure described above. Here, there is no particular limitation on the method for forming an image on the image forming layer. As described above, a sublimation-type thermal transfer sheet or a thermally-fusible thermal transfer sheet may be used, or other image forming methods may be used. Among these, from the viewpoint of reproducibility of a desired design, a sublimation-type thermal transfer sheet is preferably used.

### (6) Method for producing decorated article

Next, a method for producing a decorated article according to an embodiment of the present disclosure will be described.

The method for producing a decorated article according to the embodiment of the present disclosure is characterized by including an integration step of, by use of the decorative sheet according to the embodiment of the present disclosure described above or a modification thereof, integrating a transfer receiving article with the decorative sheet.

There is no particular limitation on the integration step. For example, a transfer step of transferring the decorative part of the decorative sheet onto a predetermined area in a transfer receiving article may be acceptable. Meanwhile, there is no particular limitation on the transfer step, which may be a step of bonding the decorative sheet on a predetermined area of a transfer receiving article, and conventionally known transfer steps may be employed. There is no particular limitation either on the bonding step, bonding may be made using the adhesive layer, mount film, double-sided tape, or the like described above.

The intermediate transfer medium of the present disclosure is an intermediate transfer medium including at least a substrate and a transfer part provided releasably on one face of the substrate, wherein the transfer part has a layered structure including at least an image forming layer that is located on the outermost surface on the opposite side to the substrate and on which an image is to be formed, and a gloss layer that is located closer to the substrate side than the image forming layer, and the transfer part has a maximum transmittance in the wavelength region of 380 nm to 780 nm of 40% or less. The intermediate transfer medium satisfies one or a plurality of the following (i) to (v), and when a plurality thereof is satisfied, any of the following (i) to (v) may be combined.
(i) The transfer part includes an exfoliate layer located closest to the substrate.
(ii) The transfer part includes a concealing layer located closer to the substrate side than the gloss layer.
(iii) The gloss layer is one or two or more selected from a metal pigment-containing layer, a metal vapor-deposited layer, and a pearl pigment-containing layer.
(iv) The gloss layer is an indium vapor-deposited layer or a tin vapor-deposited layer.
(v) The gloss layer is discontinuous.

The recording medium of the present disclosure includes at least a substrate, a gloss layer, and an image forming layer that are layered in this order, an image being to be formed on the image forming layer, the entire recording medium having a maximum transmittance in the wavelength region of 380 nm to 780 nm of 40% or less. The recording medium may satisfy the following (i).
(i) A part or all of the substrate is separable.

The method for producing a decorative sheet of the present disclosure includes an image forming step of forming an image on the image forming layer in the intermediate transfer medium of the present disclosure, and the following (i) may be combined.
(i) The image forming step is image formation by sublimation-type thermal transfer.

The method for producing a decorative sheet of the present disclosure includes an image forming step of forming an image on the image forming layer in the recording medium of the present disclosure, and the following (i) may be combined.
(i) The image forming step is image formation by sublimation-type thermal transfer.

The decorative sheet of the present disclosure is a decorative sheet including at least a substrate and a decorative part provided releasably on one face of the substrate, wherein the decorative part has a layered structure including at least an image layer having an image formed thereon and a gloss layer, and the decorative part has a maximum transmittance in the wavelength region of 380 nm to 780 nm of 40% or less, or is a decorative sheet including at least a substrate and a decorative part provided on one face of the substrate, wherein the decorative part has a layered structure including at least an image layer having an image formed thereon and a gloss layer, and the decorative sheet has a maximum transmittance in the wavelength region of 380 nm to 780 nm of 40% or less. The decorative sheet satisfies one or a plurality of the following (i) to (v), and when a plurality thereof is satisfied, any of the following (i) to (v) may be combined.
(i) The gloss layer is located closer to the substrate side than the image layer.
(ii) An adhesive layer is located on the surface on the opposite side to the substrate of the decorative part.
(iii) The adhesive layer includes either one or both of an ultraviolet absorbing agent and an ultraviolet scattering agent.
(iv) The adhesive layer is a pressure-sensitive adhesive layer or a heat seal layer.
(v) A part or all of the substrate is separable.

The method for producing a decorated article of the present disclosure includes an integration step of integrating a transfer receiving article and the decorative sheet of the present disclosure. The method satisfies one or a plurality of the following (i) to (iii), and when a plurality thereof is satisfied, any of the following (i) to (iii) may be combined.
(i) The integration step is a transfer step of transferring the decorative part in the decorative sheet of the present disclosure onto a predetermined area in a transfer receiving article.
(ii) The integration step is a step of bonding the decorative sheet of the present disclosure on a predetermined area in a transfer receiving article.
(iii) The predetermined area in the transfer receiving article is transparent.

### Examples

Hereinafter, an intermediate transfer medium and a decorative sheet according to the embodiments of the present disclosure will be described with reference to examples and comparative examples. Unless otherwise specified, the expression of "part(s)" in the text means that by mass. The amount of a component blended shown with its solid content ratio indicates a mass not in terms of solid content.

### (Example 1)

A polyethylene terephthalate film having a thickness of 16 µm was provided as a substrate.

Then, a coating liquid for exfoliate layer having the following composition was coated onto the above substrate, and the coated liquid was dried to form an exfoliate layer having a thickness of 1 µm.

### <Coating liquid for exfoliate layer>

| | |
|---|---|
| Acrylic resin | 29 parts |

### (DIANAL(R) BR-87, Mitsubishi Chemical Corporation)

| | |
|---|---|
| Polyester | 1 part |

### (Vylon(R) 200, TOYOBO CO., LTD.)

| | |
|---|---|
| Methyl ethyl ketone | 35 parts |
| Toluene | 35 parts |

Next, aluminum was vapor-deposited by a vacuum vapor deposition method onto the above exfoliate layer to form a gloss layer (aluminum vapor-deposited layer) having a thickness of 100 nm.

Then, a coating liquid for receiving layer having the following composition was coated onto the above gloss layer, the coated liquid was dried to form an image forming layer (receiving layer) having a thickness of 2 µm, and thus, an intermediate transfer medium of Example 1 was prepared.

### <Coating liquid for receiving layer>

| | |
|---|---|
| Vinyl chloride-vinyl acetate copolymer (SOLBIN(R) CNL, Nissin Chemical Co., Ltd.) | 17.6 parts |
| Silicone oil (X-22-3000T, manufactured by Shin-Etsu Chemical Ltd.)Co., | 2.4 parts |
| Methyl ethyl ketone | 40 parts |
| Toluene | 40 parts |

### (Example 2)

The same procedure as described in Example 1 was repeated, except for changing the thickness of the gloss layer (aluminum vapor-deposited layer) to 300 nm, to thereby prepare an intermediate transfer medium of Example 2.

### (Example 3)

A polyethylene terephthalate film having a thickness of 16 µm was provided as a substrate.

Next, the coating liquid for exfoliate layer having the above composition was coated onto the above substrate, and the coated liquid was dried to form an exfoliate layer having a thickness of 1 µm.

Then, a coating liquid for concealing layer having the following composition was coated onto the above exfoliate layer, and the coated liquid was dried to form a concealing layer having a thickness of 2 µm.

### <Coating liquid for concealing layer>

| | |
|---|---|
| Carbon black | 20 parts |
| Vinyl chloride-vinyl acetate copolymer (SOLBIN(R) CNL, Nissin Chemical Co., Ltd.) | 20 parts |
| Methyl ethyl ketone | 30 parts |
| Toluene | 30 parts |

Next, aluminum was vapor-deposited by a vacuum vapor deposition method onto the above concealing layer to form a gloss layer (aluminum vapor-deposited layer) having a thickness of 100 nm.

Then, the coating liquid for receiving layer having the above composition was coated onto the above gloss layer, the coated liquid was dried to form an image forming layer (receiving layer) having a thickness of 2 µm, and thus, an intermediate transfer medium of Example 3 was prepared.

### (Example 4)

The same procedure as described in Example 1 was repeated, except for vacuum-depositing tin to form a gloss layer (tin vapor-deposited layer) having a thickness of 200 nm instead of the gloss layer (aluminum vapor-deposited layer) of Example 1, to thereby prepare an intermediate transfer medium of Example 4.

### (Example 5)

The same procedure as described in Example 1 was repeated, except for vacuum-depositing indium to form a gloss layer (indium vapor-deposited layer) having a thickness of 200 nm instead of the gloss layer (aluminum vapor-deposited layer) of Example 1, to thereby prepare an intermediate transfer medium of Example 5.

### (Example 6)

The same procedure as described in Example 1 was repeated, except for coating the following coating liquid for aluminum pigment layer and drying the coated liquid to form a gloss layer (aluminum pigment layer) having a thickness of 2 µm instead of the gloss layer (aluminum vapor-deposited layer) of Example 1, to thereby prepare an intermediate transfer medium of Example 6.

### <Coating liquid for aluminum pigment layer>

| | |
|---|---|
| Aluminum pigment | 20 parts |
| Vinyl chloride - vinyl acetate copolymer (SOLBIN(R) CNL, Nissin Chemical Co., Ltd.) | 20 parts |
| Methyl ethyl ketone | 30 parts |
| Toluene | 30 parts |

### (Example 7)

The same procedure as described in Example 3 was repeated, except for coating the above coating liquid for aluminum pigment layer and drying the coated liquid to form a gloss layer (aluminum pigment layer) having a thickness of 2 µm instead of the gloss layer (aluminum vapor-deposited layer) of Example 3, to thereby prepare an intermediate transfer medium of Example 7.

### (Example 8)

The same procedure as described in Example 3 was repeated, except for coating the following coating liquid for pearl pigment layer and drying the coated liquid to form a gloss layer (pearl pigment layer) having a thickness of 4 µm instead of the gloss layer (aluminum vapor-deposited layer) of Example 3, to thereby prepare an intermediate transfer medium of Example 8.

### <Coating liquid for pearl pigment layer>

| | |
|---|---|
| Silver pearl pigment (particle size: 5 to 25 µm)(Iriodin(R) 123 Bright Luster Satin, Merck KGaA) | 30parts |
| Vinyl chloride-vinyl acetate copolymer (SOLBIN(R) CNL, Nissin Chemical Co., Ltd.) | 10 parts |
| Methyl ethyl ketone | 30 parts |
| Toluene | 30 parts |

### (Example 9)

The same procedure as described in Example 3 was repeated, except for coating the following coating liquid for bright pigment layer and drying the coated liquid to form a gloss layer (bright pigment layer) having a thickness of 2 µm instead of the gloss layer (aluminum vapor-deposited layer) of Example 6 and, as a concealing layer, coating the coating liquid for aluminum pigment layer of Example 6 and drying the coated liquid to form a concealing layer having a thickness of 2 µm, to thereby prepare an intermediate transfer medium of Example 9.

### <Coating liquid for bright pigment layer>

| | |
|---|---|
| Bright pigment (average particle size: 18 µm, particle thickness: 1 µm silver-coated flakes) (METASHINE(R) ST1018PSR1, Nippon Sheet Glass Company, Ltd.) | 20 parts |
| Vinyl chloride-vinyl acetate copolymer (SOLBIN(R) CNL, Nissin Chemical Co., Ltd.) | 20 parts |
| Methyl ethyl ketone | 30 parts |
| Toluene | 30 parts |

### (Example 10)

The same procedure as described in Example 9 was repeated, except for providing no exfoliate layer, to thereby prepare a recording medium of Example 10.

### (Comparative Example 1)

The same procedure as described in Example 1 was repeated, except for vacuum-depositing titanium oxide to form a high refractive transparent layer (titanium oxide vapor-deposited layer) having a thickness of 50 nm instead of the gloss layer (aluminum vapor-deposited layer) of Example 1, to thereby prepare an intermediate transfer medium of Comparative Example.

### (Measurement of transmittances)

The transmittances in the region of 380 nm to 780 nm of the transfer part of the intermediate transfer medium of each of Examples and Comparative Example were measured using an UV-VIS Spectrophotometer (UV-3100PC, SHIMADZU CORPORATION) including an integrating sphere attachment (ISR-3100, SHIMADZU CORPORATION) attached. For the recording medium of Example, the transmittances in the region of 380 nm to 780 nm of the entire recording medium were measured. Specifically, a transparent glass plate having a thickness of 5 mm (GB300, AS ONE Corporation) was provided as a transfer receiving article, and the transfer part was transferred from the intermediate transfer medium of each of Examples and Comparative Example onto this transfer receiving article. The transfer receiving article including the transfer part transferred thereon was placed on the sample-beam side of the spectrophotometer, a transparent glass plate equivalent to the transfer receiving article was placed as a blank on the reference-beam side thereof, and the transmittances in the region of 380 nm to 780 nm were measured.

### (Formation of image layer)

The intermediate transfer medium and recording medium of each of Examples and Comparative Example and a thermal transfer ink ribbon (ink ribbon specialized for sublimable type printer DS620 (Dai Nippon Printing Co., Ltd.)) were combined, and a gray image (image gray scale: 128/256) was formed on the receiving layer of each of the intermediate transfer medium and recording medium with the following printer.

### <Printer>

### Thermal head: KEE-57-12GAN2-STA (KYOCERA Corporation)

Heater average resistance: 3303(Ω)
Main scanning direction printing density: 300 (dpi)
Sub scanning direction printing density: 300 (dpi)
Line cycle: 3.0 (msec./line)
Printing start temperature: 35 (°C)
Pulse duty ratio: 85(%)
Printing voltage: 18.0 (V)

### (Preparation of heat seal layer transfer sheet)

As a substrate, a 5-µm thick polyethylene terephthalate film having an easy-adhesive layer attached was used. A coating liquid for release layer having the following composition was coated onto the easy-adhesive layer side of this substrate so as to obtain a thickness of 0.2 µm in the dried state, and the coated liquid was dried to form a release layer. Then, a coating liquid for heat seal layer having the following composition was coated onto the release layer so as to obtain a thickness of 1 µm in the dried state, and the coated liquid was dried to form a heat seal layer. Thus, provided was a heat seal layer transfer sheet, in which the release layer and the heat seal layer were provided in this order on the substrate.

### <Coating liquid for release layer>

| | |
|---|---|
| Polyvinyl alcohol (PVA-110, Kuraray Co., Ltd.) | 10 parts |
| Water | 70 parts |
| Isopropyl alcohol | 20 parts |

### <Coating liquid for heat seal layer>

| | |
|---|---|
| Polyester (Tg: 60°C, Mn: 10000) | 20 parts |
| (Vylon (R) GK250, TOYOBO Co., Ltd.) | |
| Methyl ethyl ketone | 40 parts |
| Toluene | 40 parts |

### (Production of decorative sheet)

Next, the heat seal layer of the above heat seal layer transfer sheet was transferred onto the image layer in the intermediate transfer medium and recording medium of each of Examples and Comparative Example using the above printer at an energy of 55/255 gray scale (energy gray scale) to prepare a decorative sheet of each of Examples and Comparative Example.

### (Production of decorated article)

Next, a transparent glass plate having a thickness of 5 mm (GB300, AS ONE Corporation) was provided as a transfer receiving article, and the decorative part in the decorative sheet of each of the above Examples and Comparative Example, specifically, the decorative part having a layered structure composed of an exfoliate layer, a concealing layer, a gloss layer, and an image layer, was transferred onto one face of the glass plate via the above heat seal layer under the following transfer condition to prepare a decorated article of each of Examples and Comparative Example. In Example 10, a decorative sheet having a layered structure composed of a substrate, a concealing layer, a gloss layer, and an image layer was integrated via the above heat seal layer.

### <Transfer condition>

Transfer apparatus: card laminator (SIP Corporation)
Transfer temperature: 180°C
Transfer speed: 2 inch/sec.

### (Evaluation of image clarity)

With respect to the decorated article of each of Examples, how the image appeared through the transparent glass plate as the transfer receiving article was visually evaluated.

### <Evaluation criteria>

A: Having a gloss feel and high brightness.
B: Having a gloss feel and high brightness that are slightly insufficient.
C: Having a gloss feel and high brightness that are slightly insufficient. Having graininess.
NG: Having a gloss feel and high brightness that are poor.

### (Evaluation of backlight concealability)

With respect to the decorated article of each of Examples and Comparative Example, a 20 W fluorescent lamp was placed at a 10-cm distance from the surface on the decorative part side in the decorated article, and then, how the image appeared through the transparent glass plate as the transfer receiving article was visually evaluated.

### <Evaluation criteria>

A: Transmits substantially no light of the fluorescent lamp, and the image is clear.
B: Slightly transmit the light of the fluorescent lamp, but the image can be recognized.
NG: It is difficult to recognize the image due to the transmitted light of the fluorescent lamp.

The evaluation results of image clarity and backlight concealability are shown in the following Table 1.

**[Table 1]**

| | Gloss layer | Concealing layer | Maximum transmittance | Image clarity | Backlight concealability |
|---|---|---|---|---|---|
| Example 1 | Aluminum vapor-deposited layer 100 nm | - | 10% | A | A |
| Example 2 | Aluminum vapor-deposited layer 300 nm | - | < 1% | A | A |
| Example 3 | Aluminum vapor-deposited layer 100 nm | Carbon black layer | < 1% | A | A |
| Example 4 | Tin vapor-deposited layer 200 nm | - | < 1% | A | A |
| Example 5 | Indium vapor-deposited layer 200 nm | - | < 1% | A | A |
| Example 6 | Aluminum pigment layer 2 µm | - | 35% | B | B |
| Example 7 | Aluminum pigment layer 2 µm | Carbon black layer | 3% | A | A |
| Example 8 | Pearl pigment layer 4 µm | Carbon black layer | 5% | A | A |
| Example 9 | Bright pigment layer 2 µm | Aluminum pigment layer | 33% | C | B |
| Example 10 | Bright pigment layer 2 µm | Aluminum pigment layer | 33% | C | B |
| Comparative Example 1 | Titanium oxide vapor-deposited layer 50 nm | | 95% | NG | NG |

### Reference Signs List

- 1: intermediate transfer medium
- 2: decorative sheet
- 3: decorated article
- 10: substrate
- 20: transfer part
- 21: image forming layer
- 22: gloss layer
- 23: concealing layer
- 24: exfoliate layer
- 30: decorative part
- 31: image layer
- 50: adhesive layer (heat seal layer)
- 70: transfer receiving article

## Claims

1. An intermediate transfer medium comprising at least a substrate and a transfer part provided releasably on one face of the substrate, wherein
the transfer part has a layered structure comprising at least an image forming layer that is located on the outermost surface on the opposite side to the substrate and on which an image is to be formed, and a gloss layer that is located closer to the substrate side than the image forming layer, and
the transfer part has a maximum transmittance in the wavelength region of 380 nm to 780 nm of 40% or less.

2. The intermediate transfer medium according to claim 1, wherein the transfer part comprises an exfoliate layer located closest to the substrate.

3. The intermediate transfer medium according to claim 1 or 2, wherein the transfer part comprises a concealing layer located closer to the substrate side than the gloss layer.

4. The intermediate transfer medium according to any one of claims 1 to 3, wherein the gloss layer is one or two or more selected from a metal pigment-containing layer, a metal vapor-deposited layer, and a pearl pigment-containing layer.

5. The intermediate transfer medium according to any one of claims 1 to 3, wherein the gloss layer is an indium vapor-deposited layer or a tin vapor-deposited layer.

6. The intermediate transfer medium according to any one of claims 1 to 5, wherein the gloss layer is discontinuous.

7. A recording medium comprising at least a substrate, a gloss layer, and an image forming layer that are layered in this order, an image being to be formed on the image forming layer, the entire recording medium having a maximum transmittance in the wavelength region of 380 nm to 780 nm of 40% or less.

8. The recording medium according to claim 7, wherein a part or all of the substrate is separable.

9. A method for producing a decorative sheet, comprising an image forming of forming an image on an image forming layer in the intermediate transfer medium according to any one of claims 1 to 6.

10. The method for producing a decorative sheet according to claim 9, wherein the image forming is image formation by sublimation-type thermal transfer.

11. A method for producing a decorative sheet, comprising an image forming of forming an image on an image forming layer in the recording medium according to claim 7 or 8.

12. The method for producing a decorative sheet according to claim 11, wherein the image forming is image formation by sublimation-type thermal transfer.

13. A decorative sheet comprising at least a substrate and a decorative part provided releasably on one face of the substrate, wherein
the decorative part has a layered structure comprising at least an image layer having an image formed thereon and a gloss layer, and
the decorative part has a maximum transmittance in the wavelength region of 380 nm to 780 nm of 40% or less.

14. A decorative sheet comprising at least a substrate and a decorative part provided on one face of the substrate, wherein
the decorative part has a layered structure comprising at least an image layer having an image formed thereon and a gloss layer, and
the decorative sheet has a maximum transmittance in the wavelength region of 380 nm to 780 nm of 40% or less.

15. The decorative sheet according to claim 13 or 14, wherein the gloss layer is located closer to the substrate side than the image layer.

16. The decorative sheet according to any one of claims 13 to 15, wherein an adhesive layer is located on the surface on the opposite side to the substrate of the decorative part.

17. The decorative sheet according to claim 16, wherein the adhesive layer comprises either one or both of an ultraviolet absorbing agent and an ultraviolet scattering agent.

18. The decorative sheet according to claim 16 or 17, wherein the adhesive layer is a pressure-sensitive adhesive layer or a heat seal layer.

19. The decorative sheet according to any one of claims 13 to 15, wherein a part or all of the substrate is separable.

20. A method for producing a decorated article comprising an integration of integrating a transfer receiving article and the decorative sheet according to any one of claims 13 to 19.

21. The method for producing a decorated article according to claim 20, wherein the integration is a transfer of transferring the decorative part in the decorative sheet according to any one of claims 13 to 19 onto a predetermined area in a transfer receiving article.

22. The method for producing a decorated article according to claim 20, wherein the integration is a bonding the decorative sheet according to any one of claims 13 to 19 on a predetermined area in a transfer receiving article.

23. The method for producing a decorated article according to any one of claims 20 to 22, wherein the predetermined area in the transfer receiving article is transparent.

24. A decorated article integrated with the decorative sheet according to any one of claims 13 to 19.
